(19) Europäisches Patentamt
European Patent Office
Office européen des brevets

(11) Veröffentlichungsnummer: **0 225 539**
**B1**

# (12) EUROPÄISCHE PATENTSCHRIFT

(45) Veröffentlichungstag der Patentschrift: **02.08.89**

(51) Int. Cl.⁴: **C08G 63/60**, C08G 63/68, C08G 63/66

(21) Anmeldenummer: **86116322.8**

(22) Anmeldetag: **25.11.86**

## (54) Vollaromatische Polyetherester, deren Herstellung und Verwendung.

(30) Priorität: **04.12.85 DE 3542813**

(43) Veröffentlichungstag der Anmeldung: **16.06.87 Patentblatt 87/25**

(45) Bekanntmachung des Hinweises auf die Patenterteilung: **02.08.89 Patentblatt 89/31**

(84) Benannte Vertragsstaaten: **BE CH DE FR GB IT LI LU NL SE**

(56) Entgegenhaltungen:
**EP-A- 0 139 303**
**US-A- 4 196 275**

**CHEMICAL ABSTRACTS, Band 77, Nr. 10, 4. September 1972, Seite 25, Zusammenfassung Nr. 62684z, Columbus, Ohio, US; W.A. LEE et al.: "Internal plasticization of aromatic polyesters by alkyl side chains", & GT. BRIT., ROY. AIRCR. ESTAB., TECH. REP. 1971, TR 71223, 14 pp.plication to Fatty Acids" 000**

(73) Patentinhaber: **BASF Aktiengesellschaft, Carl-Bosch-Strasse 38, D-6700 Ludwigshafen(DE)**

(72) Erfinder: **Kock, Hans-Jakob, Dr., Benckiserstrasse 63, D-6700 Ludwigshafen(DE)**
Erfinder: **Portugall, Michael, Dr., Raiffeisenstrasse 7, D-6706 Wachenheim(DE)**

**EP 0 225 539 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung sind vollaromatische Polyetherester, die unterhalb 300°C eine flüssig-kristalline fadenbildende Schmelze bilden.

Es wurden schon eine Reihe von vollaromatischen flüssig-kristallinen Polyestern beschrieben. Solche Polyester haben jedoch keine ausreichende Wärmeformbeständigkeit und zudem ist deren Oberflächenqualität insbesondere deren Abriebfestigkeit unbefriedigend. In der EP-A 115 967 wird beschrieben, daß aromatische Polyester, die aus Hydroxynaphthalincarbonsäure, Terephthalsäure und aromatischen Dihydroxyverbindungen aufgebaut sind, 10 bis 70 Vol.% Wollastonit zugesetzt werden sollen, um die Abriebfestigkeit zu verbessern. Der Zusatz von solchen Füllmitteln beeinträchtigt jedoch andere Eigenschaften des Polymeren. In der EP-A 81900 werden anisotrope Polyesteramide und Polyester beschrieben, die aus einer Vielzahl von aromatischen Dicarbonsäuren und aromatischen Dihyroxyverbindungen aufgebaut sein können. U.a. fällt unter eine allgemeine Formel 4,4'-Di(p-hydroxyphenoxy)-diphenylsulfon als möglicher Ausgangsstoff. Über die Oberflächenqualität der erhaltenen Produkte sowie deren Wärmeformbeständigkeit wird jedoch keine Aussage gemacht. Aus der EP-A 139 303 sind anisotrope Polyester aus den Komponenten a, b, e und 2,7-Dihyroxynaphtolin bekannt.

Es war deshalb die technische Aufgabe gestellt, vollaromatische flüssigkristalline Polyetherester zur Verfügung zustellen, die unterhalb 300°C eine flüssig-kristalline fadenziehende Schmelze bilden und somit leicht verarbeitbar sind und dazu eine möglichst hohe Glasübergangstemperatur haben und sich darüber hinaus durch hohe Abriebfestigkeit und Chemikalienbeständigkeit auszeichnen.

Diese technische Aufgabe wird gelöst durch vollaromatische Polyetherester, die unterhalb 300°C eine flüssig-kristalline fadenziehende Schmelze bilden, aufgebaut aus

a) mindestens 10 Mol.% wiederkehrenden Einheiten der Formel I

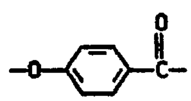

I

b) einer Summe der Komponenten c) und d) äquivalenten molaren Menge wiederkehrenden Einheiten der Formel II

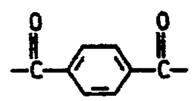

II

c) 5 bis 20 Mol.% wiederkehrenden Einheiten der Formel III

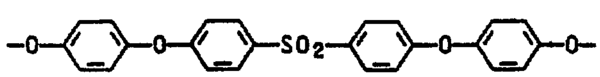

III

d) und 10 bis 30 Mol.% wiederkehrenden Einheiten der Formel IV

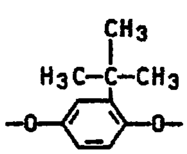

IV

wobei sich die Summe der molaren Anteile der Komponenten a, b, c und d jeweils auf 100 Mol.% ergänzen.

Die erfindungsgemäßen vollaromatischen flüssig-kristallinen Polyetherester haben den Vorteil, daß sie keine hohen Verarbeitungstemperaturen bedürfen und darüber hinaus auch bei erhöhter Temperatur gute Dauergebrauchseigenschaften aufweisen. Ferner zeichnen sie sich durch hohe Abriebfestigkeit und Chemikalienbeständigkeit aus.

Der flüssig-kristalline Zustand der Polyetherester kann mit dem Polarisationsmikroskop nach einer in der DE-AS 25 20 810 beschriebenen Methode nachgewiesen werden. Zwischen gekreuzten Polarisatoren weisen die Polymerschmelzen die in einer Schichtdicke von 10 µm zwischen Glasplatten aufgetragen sind, Texturen auf, die einer mesomorphen (nematischen) Phase zugeordnet werden können.

Als Ausgangsstoff der Formel I wird z.B. p-Hydroxybenzoesäure verwendet.

Als bevorzugte Ausgangsverbindung der Formel II wird Terephthalsäure verwendet.

Als Ausgangsverbindung der Formel III wird z.B. 4,4'-Di(p-hydroxyphenoxy)-phenylsulfon und als Ausgangsverbindung der Formel IV wird vorteilhaft tert.-Butylhydrochinon verwendet.

Bevorzugte vollaromatische Polyetherester enthalten neben der Komponente a), 10 bis 15 Mol.% Komponente c), 15 bis 25 Mol.% Komponente d) sowie der Summe aus c) und d) äquivalenten molaren Menge der Komponente b).

In anderen bevorzugten vollaromatischen Polyetherestern ist ein Teil der Einheiten d) ersetzt durch

e) wiederkehrenden Einheiten der Formel V

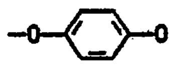

V

als Ausgangsverbindung wird z.B. Hydrochinon verwendet, und/oder

f) wiederkehrende Einheiten der Formel VI

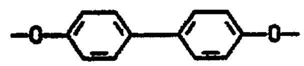

VI

als geeignete Ausgangsverbindung wird bevorzugt 4,4'-Dihydroxybiphenyl verwendet und/oder

g) wiederkehrende Einheiten der Formel VII

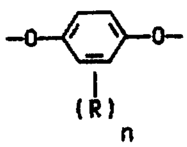

VII

in R jeweils einen Methylrest, Phenylrest oder ein Chloratom bezeichnet und n 1, 2 oder 3 bedeutet. Geeignete Ausgangsverbindungen sind Methylhydrochinon, Trimethylhydrochinon, Phenylhydrochinon, Chlorhydrochinon.

Solche vollaromatischen Polyetherester enthalten die wiederkehrenden Einheiten e) und/oder f) in einer Menge von 5 bis 10 Mol.%. In einer anderen bevorzugten Zusammensetzung enthalten die vollaromatischen Polyetherester die Komponente g) in einer Menge von 5 bis 20 Mol.%.

Es versteht sich, daß sich die Summe der Komponenten (a, b, c und d) auf jeweils 100 Mol.% ergänzen.

Bevorzugte vollaromatische flüssig-kristalline Polyetherester haben eine Glastemperatur von ≧ 150°C, insbesondere ≧ 160°C. Die Glastemperatur soll dabei gemessen werden mit der DSC-Methode, wie sie beschrieben ist von K.H. Illers und anderen in Makromolekulare Chemie, Vol. 127,1 (1969). Bevorzugt sind die flüssig-kristallinen Polyetherester, die bei einer Temperatur > 220°C und < 280°C Teilkristallinität aufweisen. Die erfindungsgemäßen Polyetherester bilden bei einer Temperatur < 300°C, eine flüssig-kristalline fadenbildende Schmelze.

Die erfindungsgemäßen flüssig-kristallinen Polyetherester können nach verschiedenen Verfahren hergestellt werden, wie sie beispielsweise in der US-PS 4 375 530 und US-PS 4 118 372 beschrieben werden.

Die Massekondensation umfaßt allgemein eine Alkanoylierungsstufe, der die eingesetzten Monomeren mit Anhydriden umgesetzt werden und eine Polymerisationsstufe, in der Polykondensat unter Abspaltung von aliphatischen Carbonsäuren gebildet wird. Verfahren, bei denen eine Vorpolymerisationsstufe zwischengeschaltet wird, werden in der DE-OS 3 320 118 beschrieben. Solche Verfahren benötigen allerdings Reaktionszeiten über 10 Stunden.

Nach einer vorteilhaften Arbeitsweise erhält man die erfindungsgemäßen Polyester in einem Einstufenverfahren, bei dem man die nicht derivatisierten Ausgangsstoffe unter Verwendung von Anhydriden niederer Fettsäuren, z.B. von Fettsäuren mit 2 bis 4 Kohlenstoffatomen, insbesondere Essigsäureanhydrid umsetzt. Vorteilhaft werden Katalysatoren, die bekanntlich die Polykondensation sowie Umesterungsreaktionen beschleunigen, in einer Menge von 0,001 bis 1 Gew.%, bezogen auf die Ausgangsstoffe, mitverwendet. Die Ausgangsstoffe werden zusammen z.B. mit Essigsäureanhydrid vorteilhaft in einem mindestens 5 %igen molaren Überschuß, bezogen auf die vorhandenen Hydroxylgruppen zweckmäßig unter Inertgasatmosphäre und Rühren auf eine Temperatur erhitzt, bei der Rückfluß zu beobachten ist. Vorteilhaft wird die Temperatur stufenweise gesteigert, z.B. höchstens 5 Stunden, vorzugsweise bis zu 2 Stunden auf 150 bis 220°C, anschließend wird die Temperatur langsam auf 250 bis 350°C gesteigert. Dabei werden übrschüssiges Fettsäureanhydrid und Fettsäure abdestilliert. Zur Entfernung der letzten Reste an Fettsäure ist es zweckmäßig gegen Ende der Kondensation verminderten Druck z.B. bis zu 0,5 mbar anzuwenden.

Bemerkenswert und nicht vorherzusehen bei der Anwendung dieses Einstufenverfahrens ist zunächst die problemlose und vollständige Reaktion auch ohne Katalysatorzusatz zu den gewünschten Polymeren in einer relativ kurzen Zeit. Die ist umso erstaunlicher als durch die Vielzahl chemisch unterschiedlicher Hydroxygruppen eine Abstufung der Reaktivitäten und damit ein mangelhafter polymerer Aufbau zu erwarten war.

Die so erhaltenen vollaromatischen flüssig-kristallinen Polyetherester werden vorteilhaft im festen Zustand z.B. bei Temperaturen von 150 bis 250°C weiter kondensiert bis zur gewünschten Viskosität. Diese Festphasenkondensation kann sowohl vor als auch nach einer thermoplastischen Verformung erfolgen. Die erfindungsgemäßen vollaromatischen flüssig-kristallinen Polyetherester eignen sich zur Herstellung von Fäden, Folien, Schäumen und technischen Formteilen durch Spritzguß oder Extrusion.

Die Erfindung sei an folgenden Beispielen veranschaulicht.

Beispiel 1

0,2 mol (30,3 mol.%) Terephthalsäure, 0,26 mol (39,4 mol.%) 4-Hydroxybenzoesäure, 0,16 mol (24,24 mol.%) t-butyl-Hydrochinon, 0,04 mol (6,06 mol.%) 4,4'-Di(p-hydroxyphenoxy)diphenylsulfon sowie 0,86 mol Essigsäureanhydrid werden in einen Kolben mit Rührer, Stickstoffeinleitung und einem Destillationsaufsatz eingewogen: Unter $N_2$-Atmosphäre wird in einem Metallbad auf 100°C erhitzt. Die Temperatur wird dann in 30' auf 150°C, in weiteren 100' auf 200°C und anschließend in 120' auf die Endtemperatur von 325°C erhöht.

Anschließend wird der Druck auf 560 mbar und dann alle 10' auf die Hälfte verringert. Das Endvakuum beträgt 10 mbar. Man erhält so eine hochviskose, fadenbildende mesomorphe Schmelze. Aus DSC-Messungen ergibt sich eine Glastemperatur von 156°C. Die inhärente Viskosität beträgt 0,9 dl/g, gemessen in 0,5 gew.%iger Lösung in p-Chlorphenol bei 50°C.

Das Polymerisat läßt sich bei $T > Tg$, insbesondere bei $T \geqq 200$°C aus der Schmelze verarbeiten.

Beispiel 2

0,2 mol (30,3 mol.%) Terephthalsäure, 0,26 mol (39,4 mol.%) 4-Hydroxybenzoesäure, 0,12 mol (18,2 mol.%) t-butyl-Hydrochinon, 0,08 mol (12,1 mol.%) 4,4'-Di(p-Hydroxyphenoxy)-diphenylsulfon sowie 0,86 mol Essigsäureanhydrid werden wie in Beispiel 1 eingesetzt. Aus DSC-Messungen ergibt sich eine Glastemperatur von 166°C. Die inhärente Viskosität beträgt 0,5 dl/g. Das Polymerisat läßt sich bei $T > Tg$, insbesondere bei $T \geqq 200$°C aus der Schmelze verarbeiten.

Beispiel 3

0,2 mol (27,03 mol.%) Terephthalsäure, 0,34 mol (45,94 mol.%) 4-Hydroxybenzoesäure, 0,16 mol (21,62 mol.%) t-Butyl-Hydrochinon, 0,04 mol (5,41 mol.%) 4,4'-Di(p-hydroxyphenoxy)diphenylsulfon sowie 0,86 mol Essigsäureanhydrid werden wie in Beispiel 1 eingesetzt. Aus DSC-Messungen ergibt sich eine Glastemperatur von 165°C. Die inhärente Viskosität beträgt 0,93 dl/g. Das Polymerisat läßt sich bei $T > Tg$, insbesondere bei $T \geqq 200$°C aus der Schmelze verarbeiten.

## Patentansprüche

1. Vollaromatische Polyetherester, die unterhalb 300°C eine flüssig-kristalline fadenziehende Schmelze bilden, aufgebaut aus

a) mindestens 10 Mol.% wiederkehrenden Einheiten der Formel I

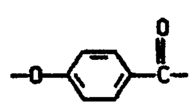

I

b) einer Summe der Komponenten c) und d) äquivalenten molaren Menge an wiederkehrenden Einheiten der Formel II

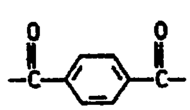

II

c) 5 bis 20 Mol.% wiederkehrenden Einheiten der Formel III

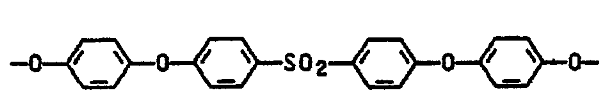

III

d) 10 bis 30 Mol.% wiederkehrenden Einheiten der Formel IV

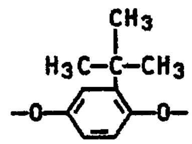

IV

wobei sich die Summe der molaren Anteile der Komponenten a, b, c und d jeweils auf 100 Mol.% ergänzen.

2. Vollaromatische mesomorphe Polyetherester nach Anspruch 1, in denen die Komponente c) 10 bis 15 Mol.% und die Komponente d) 15 bis 25 Mol.% betragen.

3. Vollaromatische mesomorphe Polyetherester nach den Ansprüchen 1 und 2, in denen zusätzlich, ein Teil der wiederkehrenden Einheiten d) ersetzt ist durch

e) wiederkehrenden Einheiten der Formel V

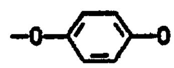

V

und/oder

f) wiederkehrenden Einheiten der Formel VI

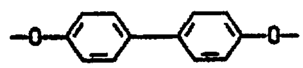

VI

und/oder

g) wiederkehrenden Einheiten der Formel VII

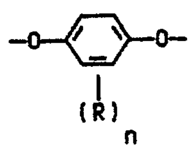

VII

in der R jeweils einen Methylrest, Phenylrest oder ein Chloratom bezeichnet und n für 1, 2 oder 3 steht, wobei die molaren Anteile der Komponenten e) und/oder f) 5 bis 10 Mol.% und der molare Anteil der Komponenete g) 5 bis 20 Mol.% betragen.

4. Vollaromatische mesomorphe Polyetherester nach den Ansprüchen 1 bis 3 mit einer Glasübergangstemperatur Tg von ≥ 150° C.

5. Verfahren zur Herstellung von Polyetherestern nach den Ansprüchen bis 1 bis 4, dadurch gekennzeichnet, daß man die Monomeren in einer Stufe in Form der underivatisierten Hydroxy- bzw. Carboxyverbindungen und in dem beschriebenen molaren Verhältnissen unter Zusatz von überschüssigen Fettsäureanhydrid bei erhöhter Temperatur umsetzt und Fettsäureanhydrid und Fettsäure aus dem Reaktionsgemisch abdestilliert.

6. Verfahren nach Anspruch 5, dadurch gekennzeichnet, daß man die vollaromatischen Polyetherester in fester Phase bei einer Temperatur von 150 bis 250°C nachkondensiert.

7. Verwendung von vollaromatischen Polyetherestern nach den Ansprüchen 1 bis 4 zur Herstellung von Fasern, Folien und Formteilen.

**Claims**

1. A wholly aromatic polyether ester which forms a liquid-crystalline fiber-forming melt below 300°C and is composed of

a) not less than 10 mol% of repeat units of the formula I

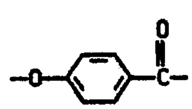

I

b) a molar amount equivalent to the total amount of components c) and d) of repeat units of the formula II

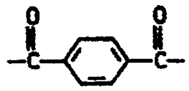

II

c) from 5 to 20 mol% of repeat units of the formula III

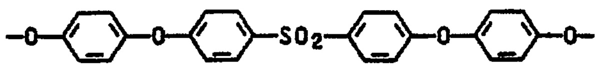

III

and

d) from 10 to 30 mol% of repeat units of the formula IV

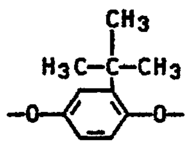

IV

the molar proportions of components a, b, c and d adding up to 100 mol% in each case.

2. A wholly aromatic mesomorphic polyether ester as claimed in claim 1, wherein component c) is from 10 to 15 mol% and component d) is from 15 to 25 mol%.

3. A wholly aromatic mesomorphic polyether ester as claimed in either of claims 1 and 2, wherein, in addition, some of the repeat units d) are replaced by

e) repeat units of the formula V

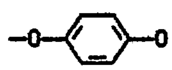

V

and/or

f) repeat units of the formula VI

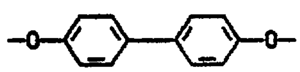

VI

and/or

g) repeat units of the formula VII

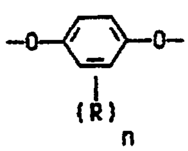

VII

where R is methyl, phenyl or chlorine, and n is 1, 2 or 3, the molar proportions of the components e) and/or f) being from 5 to 10 mol% and the molar proportion of component g) being from 5 to 20 mol%.

4. A wholly aromatic mesomorphic polyether ester as claimed in any of claims 1 to 3, which has a glass transition temperature Tg of ≥ 150°C.

5. A process for preparing polyether esters as claimed in any of claims 1 to 4 by reacting the monomers in a single stage in the form of the underivatized hydroxy and carboxy compounds and in the molar ratios described in the presence of excess fatty acid anhydride at elevated temperatures and distilling fatty acid anhydride and fatty acid out of the reaction mixture.

6. A process as claimed in claim 5, wherein the wholly aromatic polyether ester is postcondensed in the solid phase at 150–250°C.

7. The use of a wholly aromatic polyether ester as claimed in any of claims 1 to 4 for producing fibers, films and moldings.

**Revendications**

1. Polyéthers-esters totalement aromatiques, qui forment, en-dessous de 300°C, une masse fondue étirable en fils, liquide, cristalline, constitués

a) d'au moins 10% molaires d'unités récurrentes de la formule I

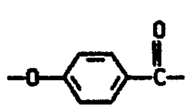

I

b) d'une quantité molaire équivalente à la somme des composants c) et d) d'unités récurrentes de la formule II

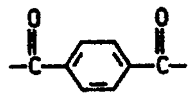

II

c) de 5 à 20% molaires d'unités récurrentes de la formule III

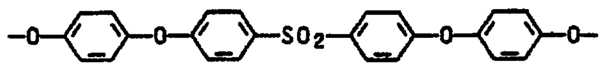

III

d) de 10 à 30% molaires d'unités récurrentes de la formule IV

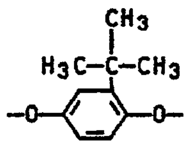

IV

où les sommes des fractions molaires des composants a, b, c et d, parfont à chaque fois 100% molaires.

2. Polyéthers-esters mésomorphes, totalement aromatiques, selon la revendication 1, dans lesquels le composant c) forme de 10 à 15% molaires et le composant d) forme de 15 à 25% molaires.

3. Polyéthers-esters mésomorphes, totalement aromatiques, selon les revendications 1 et 2, dans lesquels, de surcroît, une partie des unités récurrentes d) est remplacée par

e) des unités récurrentes de la formule V

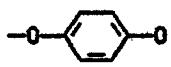

V

et/ou

f) des unités récurrentes de la formule VI

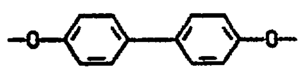

VI

et/ou

g) des unités récurrentes de la formule VII

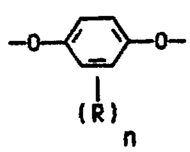

VII

dans laquelle R représente, à chaque fois, un radical méthyle, un radical phényle ou un atome de chlore et n est égal à 1, 2 ou 3, où les fractions molaires des composants e) et/ou f) constituent de 5 à 10% molaires et la fraction molaire du composant g) constitue de 5 à 20% molaires.

4. Polyéthers-esters mésomorphes, totalement aromatiques, selon les revendications 1 à 3, avec une température de transition vitreuse Tg supérieure ou égale à 150°C.

5. Procédé de préparation de polyéthers-esters selon les revendications 1 à 4, caractérisé en ce que l'on fait réagir les monomères, en une étape, sous la forme des composés hydroxylés ou carboxylés qui ne se présentent pas sous la forme de dérivés et dans les rapports molaires décrits, sous addition d'anhydride d'acide gras excédentaire, à température élevée et on chasse l'anhydride d'acide gras et l'acide gras du mélange réactionnel par distillation.

6. Procédé suivant la revendication 5, caractérisé en ce que l'on procède à la post-condensation des polyéthers-esters totalement aromatiques en phase solide, à une température de 150 à 250°C.

7. Utilisation de polyéthers-esters totalement aromatiques selon les revendications 1 à 4 pour la fabrication de fibres, de feuilles et d'articles moulés.